# EUROPEAN PATENT APPLICATION

(11) **EP 4 215 886 A1**
(43) Date of publication of application: **26.07.2023**
(21) Application number: 21869473.5
(22) Date of filing: 17.09.2021
(51) Int. Cl.: G01J 1/02, G01J 1/42, G01L 1/24, G01V 8/16

(54) **OBJECT DETECTION DEVICE**

(30) Priority: 17.09.2020 JP 2020156016
(71) Applicant: FURUKAWA ELECTRIC CO., LTD., Chiyoda-ku Tokyo 100-8322 (JP)
(72) Inventor: FUJIHATA, Takashi, Tokyo 100-8246 (JP); HASEGAWA, Hideaki, Tokyo 100-8322 (JP); ITO, Takayori, Tokyo 100-8322 (JP); TAMAOKA, Hiroyuki, Tokyo 100-8322 (JP)
(74) Representative: SSM Sandmair
(86) International application number: PCT/JP2021/034420
(87) International publication number: WO 2022/059791

(57) **Abstract**

An object detection device includes an optical fiber at least partially including a sensor optical fiber configured to transmit light with a loss of 0.3 dB/m or more and a light receiving unit configured to receive, from the optical fiber, the light received by the sensor optical fiber. The object detection device detects an object based on an intensity of the light received by the light receiving unit. The sensor optical fiber may have a core, the outer periphery of which is at least partially exposed. The outer periphery of the core may have an uneven structure provided thereon, the uneven structure having a size of 1/100 or more and 1/10 or less of a wavelength of the light received by the light receiving unit. In addition, the length of the sensor optical fiber may be ten times or more the wavelength of the light received by the light receiving unit.

## Description

### Field

The present invention relates to an object detection device.

### Background

In the related art, there is known an object detection device having an optical fiber (for example, Patent Literature 1). In the object detection device of Patent Literature 1, test light is coupled to the end face of the optical fiber in the longitudinal direction. However, the end face is narrow. Therefore, a condenser lens is provided so as to allow light from a wider detection range to be coupled to the end face of the optical fiber.

### Citation List

### Patent Literature

Patent Literature 1: JP H07-063920A

### Summary

### Technical Problem

In this type of object detection device, for example, it is beneficial to obtain an improved novel object detection device capable of setting a wider detection range with a simpler configuration.

Therefore, one of the objects of the present invention is, for example, to obtain a more improved novel object detection device.

### Solution to Problem

An object detection device according to the present invention includes, for example: an optical fiber at least partially including a sensor optical fiber configured to transmit light with a loss of 0.3 dB/m or more; and a light receiving unit configured to receive, from the optical fiber, the light received by the sensor optical fiber, wherein the object detection device is configured to detect an object based on an intensity of the light received by the light receiving unit.

In the object detection device, the sensor optical fiber may include a core, an outer periphery of which is at least partially exposed.

In the object detection device, the outer periphery may have an uneven structure provided thereon, the uneven structure having a size of 1/100 or more and 1/10 or less of a wavelength of the light received by the light receiving unit.

In the object detection device, the sensor optical fiber may have a length that is ten times or more a wavelength of the light received by the light receiving unit.

In the object detection device, the sensor optical fiber may include a curved portion.

In the object detection device, the sensor optical fiber may include a plurality of curved portions as the curved portion.

In the object detection device, a core of the sensor optical fiber may include an exposed end face intersecting a longitudinal direction.

In the object detection device, the sensor optical fibers may include a plurality of nanostructures each having a cross-sectional diameter of 100 nm or less in a cross section perpendicular to a longitudinal direction of the sensor optical fiber.

In the object detection device, the nanostructure may be a fine particle, a tube, or a void.

In the object detection device, the sensor optical fiber may be a plastic fiber.

The object detection device may include a light source configured to input test light to one end of the optical fiber, and the light receiving unit may be configured to receive the test light output from the other end of the optical fiber.

In the object detection device, the optical fiber may include the sensor optical fiber and a delivery optical fiber connected to the sensor optical fiber, the delivery optical fiber having a transmission loss smaller than a transmission loss of the sensor optical fiber.

In the object detection device, an effective relative refractive-index difference of the delivery optical fiber may be larger than an effective relative refractive-index difference of the sensor optical fiber.

The object detection device may include a light source configured to input test light to the optical fiber, and, at a wavelength of the light received by the light receiving unit, the sensor optical fiber may be a single-mode optical fiber, and the delivery optical fiber interposed between the light source and the sensor optical fiber may be a multi-mode optical fiber.

In the object detection device, external force acting on the sensor optical fiber may be detected based on the intensity of the light received by the light receiving unit.

Moreover, an object detection device according to the present invention includes, for example: an optical fiber including a sensor unit to which light is input from an outer periphery thereof; and a light receiving unit configured to receive, from the optical fiber, the light input to the sensor unit, wherein the object detection device is configured to detect an object based on an intensity of the light received by the light receiving unit.

In the object detection device, the sensor unit may include a core, an outer periphery of which is at least partially exposed.

In the object detection device, the optical fiber may include a section having a transmission loss lower than a transmission loss of the sensor unit.

In the object detection device, the optical fiber may include a section having an effective relative refractive-index difference larger than an effective relative refractive-index difference of the sensor unit.

Moreover, an object detection device according to the present invention includes, for example: an optical fiber including a core, an outer periphery of which is partially exposed; and a light receiving unit configured to receive, from the optical fiber, light input from the outer periphery, wherein the object detection device is configured to detect an object based on an intensity of the light received by the light receiving unit.

### Advantageous Effects of Invention

According to the present invention, for example, an improved novel object detection device can be obtained.

### Brief Description of Drawings

FIG. 1 is an exemplary schematic configuration diagram of an object detection device according to a first embodiment.
FIG. 2 is an exemplary schematic configuration diagram of an optical fiber according to an embodiment.
FIG. 3 is an exemplary and schematic cross-sectional view in the longitudinal direction of a part of a sensor unit of the embodiment.
FIG. 4 is an exemplary and schematic cross-sectional view perpendicular to the longitudinal direction of the sensor unit of the embodiment.
FIG. 5 is an exemplary schematic configuration diagram of a sensor unit of the object detection device according to the first embodiment, and is a diagram illustrating a state in which an object to be detected is not present.
FIG. 6 is an exemplary schematic configuration diagram of the sensor unit of the object detection device according to the first embodiment, and is a diagram illustrating a state in which the object to be detected is present.
FIG. 7 is an exemplary graph illustrating a temporal change in light receiving intensity in a light receiving unit of the object detection device according to the first embodiment, and is a graph illustrating a case where a state in which a detection target for a sensor unit is present is switched to a state in which the detection target is not present.
FIG. 8 is an exemplary schematic configuration diagram of the sensor unit of the object detection device according to the first embodiment, and is a diagram illustrating a state in which the object to be detected is present at a position farther from the sensor unit as compared with the case in FIG. 6.
FIG. 9 is an exemplary schematic configuration diagram of an object detection device according to a second embodiment.
FIG. 10 is an exemplary and schematic cross-sectional view of a part of an optical fiber of a first modification.
FIG. 11 is an exemplary and schematic cross-sectional view of a part of an optical fiber of a second modification.
FIG. 12 is an exemplary and schematic cross-sectional view of a part of an optical fiber of a third modification.
FIG. 13 is an exemplary schematic configuration diagram of a part of an optical fiber according to a fourth modification.
FIG. 14 is an exemplary and schematic perspective view of a part of an optical fiber according to a fifth modification.

### Description of Embodiments

Hereinafter, exemplary embodiments and modifications of the present invention are disclosed. Configurations of the embodiments and the modifications described below, and functions and results (effects) provided by the configurations are examples. The present invention can be implemented by configurations other than those disclosed in the following embodiments and modifications. In addition, according to the present invention, it is possible to obtain at least one of various effects (including derivative effects) obtained by the configurations.

Embodiments and modifications described below have similar configurations. Therefore, according to the configurations of the respective embodiments and modifications, similar functions and effects based on the similar configurations can be obtained. In addition, in the following description, similar reference numerals are given to similar configurations, and redundant description may be omitted.

In addition, in the present specification, ordinal numbers are given for convenience to distinguish components, members, parts, and the like, and do not indicate priority or order.

### [First embodiment]

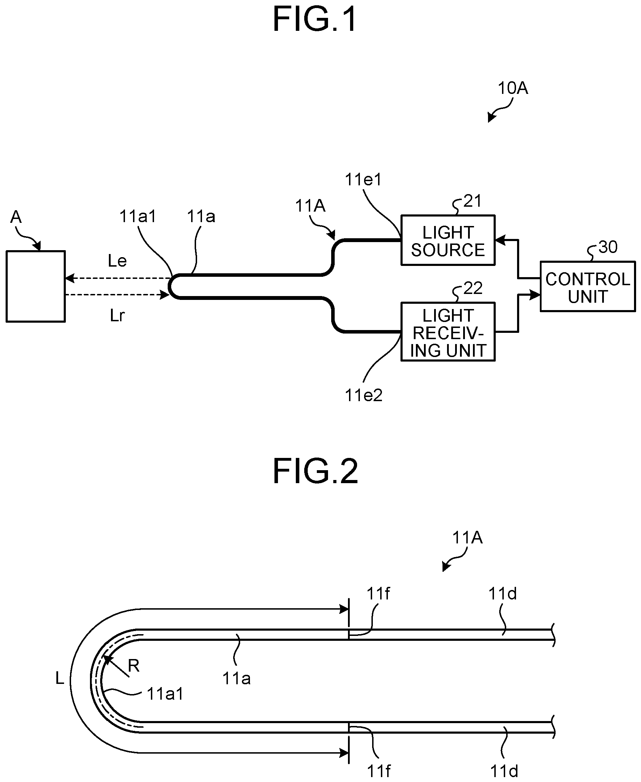

FIG. 1 is a schematic configuration diagram of an object detection device 10A of a first embodiment. The object detection device 10A is an active detection device configured to output test light and to detect an object according to a light receiving state of the output test light.

As illustrated in FIG. 1, the object detection device 10A includes an optical fiber 11A, a light source 21, a light receiving unit 22, and a control unit 30.

An end 11e1 of the optical fiber 11A in the longitudinal direction is optically connected to the light source 21, and an end 11e2 of the optical fiber 11A in the longitudinal direction is optically connected to the light receiving unit 22. Test light output from the light source 21 is input into the optical fiber 11A from the end 11e1, transmitted through the optical fiber 11A including a sensor unit 11a, output from the end 11e2 to the outside of the optical fiber 11A, and received by the light receiving unit 22. The end 11e1 is an example of one end, and the end 11e2 is an example of the other end.

The light source 21 includes, for example, a laser diode, and outputs, for example, light having a wavelength of 400 nm or more and 500 nm or less. Furthermore, the light source 21 may intermittently output optical pulse at predetermined time intervals.

The light receiving unit 22 includes, for example, a photodiode, and detects intensity of light input from the optical fiber 11A, that is, intensity of light passing through the sensor unit 11a. The light receiving unit 22 may also be referred to as a detection unit.

The control unit 30 can acquire light receiving intensity in the light receiving unit 22. In addition, the control unit 30 can switch the output and output stop of the test light in the light source 21, and can change the output state of the test light. The control unit 30 may also be referred to as an arithmetic processing unit.

FIG. 2 is a schematic configuration diagram of the optical fiber 11A. As illustrated in FIG. 2, the optical fiber 11A includes the sensor unit 11a and two delivery optical fibers 11d. The sensor unit 11a is an optical fiber interposed between the two delivery optical fibers 11d. In other words, one delivery optical fiber 11d, the sensor unit 11a, which is an optical fiber, and the other delivery optical fiber 11d are mechanically and optically connected in series. A transmission loss of the delivery optical fiber 11d is lower than a transmission loss of the sensor unit 11a. An effective relative refractive-index difference of the delivery optical fiber 11d is larger than an effective relative refractive-index difference of the sensor unit 11a. A substantial relative refractive-index difference is determined depending on a refractive index profile in the radial direction. In addition, the sensor unit 11a and the delivery optical fiber 11d are fusion-spliced at a boundary 11f between the sensor unit 11a and the delivery optical fiber 11d. The sensor unit 11a is an example of a sensor optical fiber. In addition, the delivery optical fiber 11d is an example of a section of the optical fiber 11A, the section having a lower transmission loss and a larger effective relative refractive-index difference than those of other sections (in this case, sensor unit 11a). In other words, the sensor unit 11a is a section of the optical fiber 11A, the section having a higher transmission loss and a smaller effective relative refractive-index difference than those of other sections (in this case, delivery optical fiber 11d).

In the sensor unit 11a, light (reflected light Lr in the present embodiment) is input from the outer periphery thereof.

The sensor unit 11a has a curved portion 11a1 folded back in a U shape. The curved portion 11a1 may also be referred to as a bent portion or a folded portion.

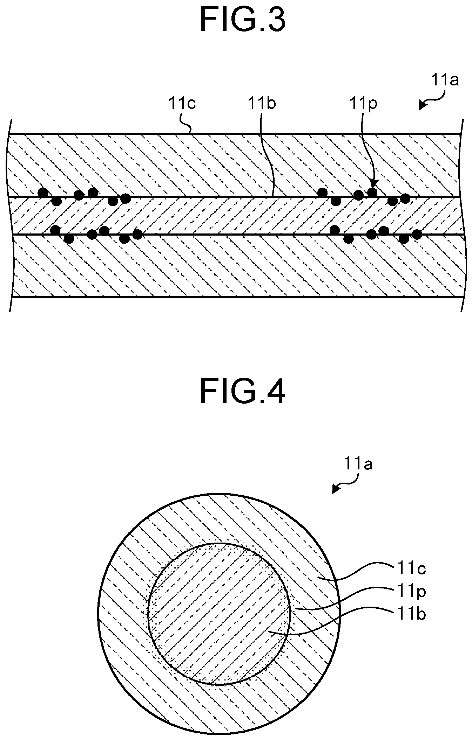

FIG. 3 is a cross-sectional view of a part of the sensor unit 11a in the longitudinal direction, and FIG. 4 is a cross-sectional view perpendicular to the longitudinal direction of the sensor unit 11a.

As is apparent from FIGS. 3 and 4, the sensor unit 11a includes a core 11b and a clad 11c surrounding the core 11b and having a refractive index lower than that of the core 11b.

The diameter of the core 11b and the relative refractive-index difference of the core 11b with respect to the clad 11c are set so that the sensor unit 11a can transmit test light in a single mode. The clad 11c may be surrounded by a coating (not illustrated). The coating in this case has transparency to the test light.

In addition, as an example, the diameter of a clad, that is, the outer diameter of a core wire is the same between the sensor unit 11a and the delivery optical fiber 11d. In addition, the diameter (outer diameter) of a core may be the same or different between the sensor unit 11a and the delivery optical fiber 11d. As an example, the diameter of the core of the delivery optical fiber 11d may be larger than the diameter of the core 11b of the sensor unit 11a. In addition, the delivery optical fiber 11d may be a multi-mode optical fiber that transmits test light in multi-mode.

The sensor unit 11a and the delivery optical fiber 11d are, for example, so-called plastic fibers made of a synthetic resin material transparent to test light, such as methacrylic resin or fluororesin. However, the present invention is not limited thereto, and the sensor unit 11a and the delivery optical fiber 11d may be glass optical fibers made of a quartz-based glass material. In addition, the sensor unit 11a and the delivery optical fiber 11d may be made of different materials.

In addition, as illustrated in FIGS. 3 and 4, the sensor unit 11a may include a plurality of nanostructures 11p in the vicinity of an interface between the core 11b and the clad 11c. However, such distribution of the nanostructures 11p is an example, and the nanostructures 11p may exist throughout the entire radial direction of the clad 11c in the sensor unit 11a. Each of the nanostructures 11p may include a filler (for example, particles such as fine particles and cylindrical tube) and a void (for example, tube and minute space of air other than fine particles), and may include at least two of these examples. The nanostructure 11p has, for example, a cross-sectional diameter of 100 nm or less in a cross section perpendicular to the longitudinal direction of the sensor unit 11a. In this case, the loss of the sensor unit 11a tends to increase as compared with a case where neither a filler nor a void is included. It is noted that more fillers and voids may be contained in the clad 11c of the sensor unit 11a than in the core 11b of the sensor unit 11a.

As a result of intensive research by the inventors, it has been found out that in the sensor unit 11a having such a configuration, since the test light is scattered by the nanostructures 11p, the test light is less likely to be confined in the core 11b, in other words, the test light is more likely to leak from the core 11b than in a configuration in which the nanostructures 11p do not exist. The fact that the test light is likely to leak from the core 11b means that light is likely to be input into the core 11b from the outside. As an example, it has been found out that such characteristics become remarkable when the transmission loss with respect to the test light in the sensor unit 11a is 0.3 dB/m or more.

As illustrated in FIG. 2, the sensor unit 11a has the curved portion 11a1 folded back in the U shape. The curved portion 11a1 may also be referred to as a bent portion or a folded portion.

In the object detection device 10A having such a configuration, as illustrated in FIG. 1, a part of the test light leaks from the sensor unit 11a and becomes emitted light Le. The reflected light Lr, which is at least a part of the emitted light Le reflected by the object A to be detected, is input into the sensor unit 11a.

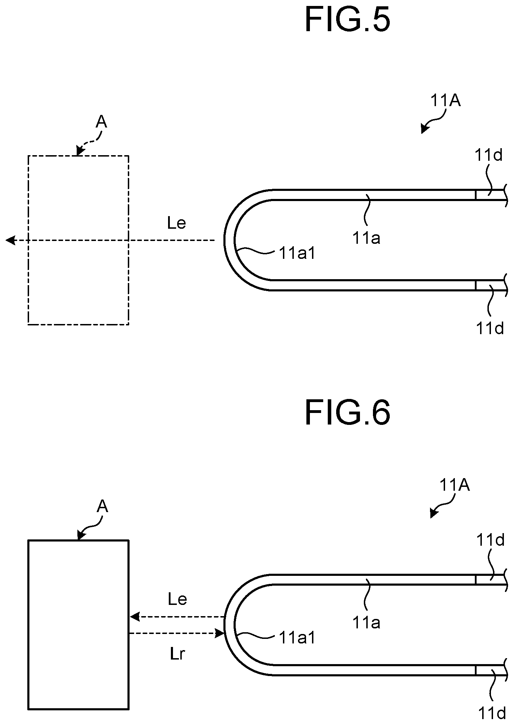

FIG. 5 is a side view of the sensor unit 11a in a case where there is no object A facing the sensor unit 11a. In this case, the emitted light Le output from the sensor unit 11a is not reflected by the object A. Therefore, the reflected light Lr of the emitted light Le from the object A is not input to the sensor unit 11a.

FIG. 6 is a side view of the sensor unit 11a in a case where there is the object A facing the sensor unit 11a. In this case, the emitted light Le output from the sensor unit 11a is reflected by the object A. At least a part of the reflected light Lr of the emitted light Le from the object A is input to the sensor unit 11a.

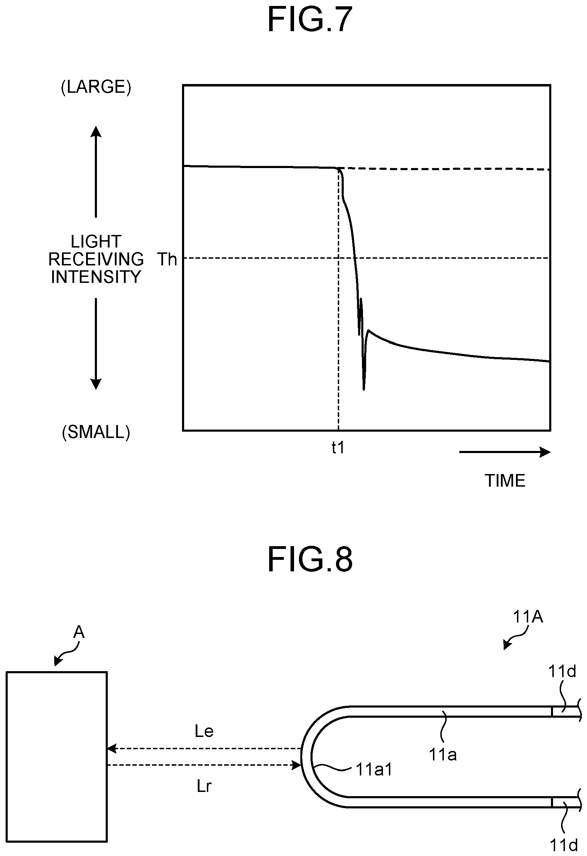

FIG. 7 is a graph illustrating a temporal change in light receiving intensity in the light receiving unit 22, and a thick solid line indicates a case where the state shown in FIG. 6 transitions to the state shown in FIG. 5 at time t1. From FIG. 7, it is clear that the light receiving intensity in the light receiving unit 22 is large in the state shown in FIG. 6 before the time t1, and the light receiving intensity in the light receiving unit 22 becomes small in the state shown in FIG. 5 after the time t1. It is noted that a thick broken line in FIG. 7 indicates a temporal change in light receiving intensity in a case where the state shown in FIG. 6 is maintained.

Therefore, the control unit 30 can detect the presence or absence of the object A based on the light receiving intensity in the light receiving unit 22. As an example, the control unit 30 can determine that the object A is present when the light receiving intensity is greater than or equal to a predetermined value Th (threshold), and can determine that the object A is not present when the light receiving intensity is less than the predetermined value Th.

FIG. 8 is a side view of the sensor unit 11a when the object A facing the sensor unit 11a is located farther from the sensor unit 11a as compared with the case in FIG. 6. In this case as well, the emitted light Le output from the sensor unit 11a is reflected by the object A, and at least a part of the reflected light Lr of the emitted light Le from the object A is input to the sensor unit 11a. However, the intensity of the reflected light Lr in the sensor unit 11a is smaller than that in the case of FIG. 6. Therefore, the light receiving intensity of the test light in the light receiving unit 22 is also smaller than that in the case of FIG. 6.

Therefore, the control unit 30 can determine whether the object A is far or close to the sensor unit 11a based on the light receiving intensity in the light receiving unit 22. As an example, the control unit 30 can determine, based on the light receiving intensity, that the object A is located closer to the sensor unit 11a as the light receiving intensity is higher, and that the object A is located farther from the sensor unit 11a as the light receiving intensity is lower. Furthermore, the control unit 30 can detect a distance between the object A and the sensor unit 11a. As an example, in a case where a correlation between the position of the target object A and the light receiving intensity is acquired in advance, the control unit 30 can estimate the position of the object A corresponding to the light receiving intensity in the light receiving unit 22 from the correlation. Furthermore, the control unit 30 can also estimate a moving speed of the object A from a temporal change in the estimated position of the object A.

In addition, as a result of intensive research by the inventors, it has been found out that, in such a configuration, as external force acting on the sensor unit 11a increases, leakage of the test light from the sensor unit 11a increases, in other words, the transmission loss in the sensor unit 11a increases. Furthermore, in the sensor unit 11a in which the test light easily leaks from the core 11b, it has been found out that the transmission loss changes more sensitively according to the external force when the external force acts.

From such characteristics of the sensor unit 11a, the control unit 30 can calculate the external force acting on the sensor unit 11a corresponding to the light receiving intensity in the light receiving unit 22 based on the correlation between the light receiving intensity in the light receiving unit 22 experimentally acquired in advance and the external force acting on the sensor unit 11a. It is noted that the external force may be force or pressure.

Further, through intensive research by the inventors, it has been found out that, for the sensor unit 11a, a length L (refer to FIG. 2) of the sensor unit 11a is preferably ten times or more the wavelength of the test light (light received by the light receiving unit 22) from the viewpoint of the size (length) of a detection range, and specifically, is preferably 0.01 cm or more and 100 cm or less. In addition, it has been found out that a curvature radius R (refer to FIG. 2, radius of central axis of the sensor unit 11a) of the curved portion 11a1 is preferably 50 um or more and 200 um or less from the viewpoint of the transmission loss.

As described above, in the present embodiment, the light receiving unit 22 receives the light input from the outer periphery of the sensor unit 11a via the optical fiber 11A. The control unit 30 detects the object A based on the light receiving intensity in the light receiving unit 22.

According to such a configuration, for example, the object detection device 10A can be implemented by a more compact and simpler configuration based on an optical fiber. In the sensor unit 11a, light is input into the sensor unit 11a from the outer periphery of the sensor unit 11a. Therefore, a wider detection range can be secured by a simpler configuration as compared with a configuration in which light is input to the end face of the optical fiber.

Further, as in the present embodiment, the length L of the sensor unit 11a may be ten times or more the wavelength of the light received by the light receiving unit 22.

According to such a configuration, for example, the detection range by the sensor unit 11a can be set to be larger.

Further, as in the present embodiment, the sensor unit 11a may be an optical fiber that transmits the test light with a loss of 0.3 dB/m or more.

Additionally, as in the present embodiment, the sensor unit 11a may have the curved portion 11a1.

In addition, as in the present embodiment, the sensor unit 11a may include the plurality of nanostructures 11p.

Moreover, as in the present embodiment, the sensor unit 11a may be a plastic fiber.

Further, in the present embodiment, the delivery optical fiber 11d between the sensor unit 11a and the light source 21 may be a multi-mode optical fiber, and the sensor unit 11a may be a single mode optical fiber.

In addition, in the present embodiment, the sensor unit 11a may be a section in which the transmission loss is higher than that of the delivery optical fiber 11d.

Additionally, in the present embodiment, the sensor unit 11a may be a section having a smaller effective relative refractive-index difference than that of the delivery optical fiber 11d.

According to such a configuration, for example, the transmission loss in the sensor unit 11a becomes higher. As a result, light from the outside is easily input to the sensor unit 11a, and detection sensitivity by the sensor unit 11a becomes higher.

In addition, as in the present embodiment, the transmission loss of the delivery optical fiber 11d may be smaller than the transmission loss of the sensor unit 11a.

Additionally, as in the present embodiment, the effective relative refractive-index difference of the delivery optical fiber 11d may be larger than the effective relative refractive-index difference of the sensor unit 11a.

According to such a configuration, for example, the delivery optical fiber 11d can perform respective functions of confining light and transmitting the same, and the sensor unit 11a can perform respective functions of leaking or receiving light and performing detection.

In addition, as in the present embodiment, the light receiving unit 22 may receive the test light that is input from the light source 21 to the optical fiber 11A via the end 11e1 (one end), passes through the sensor unit 11a, and is output from the end 11e2 (the other end).

According to such a configuration, for example, the active object detection device 10A can be implemented with a relatively simple configuration. In addition, since it is not necessary to provide the light source 21 at a position different from the optical fiber 11A, it is easy to configure the object detection device 10A to be compact as a whole. Furthermore, in the configuration in which the sensor unit 11a includes the curved portion 11a1, since the emitted light Le is easily emitted outwards in the radial direction of the curved portion 11a1, the object A is easily detected outwards in the radial direction of the curve.

In addition, as in the present embodiment, the control unit 30 may detect the external force acting on the sensor unit 11a based on the light receiving intensity in the light receiving unit 22.

According to such a configuration, for example, the configuration can be further simplified as compared with a case where a device configured to detect external force is separately provided.

It is noted that the object detection device 10A of the present embodiment may be a passive detection device without the light source 21.

### [Second embodiment]

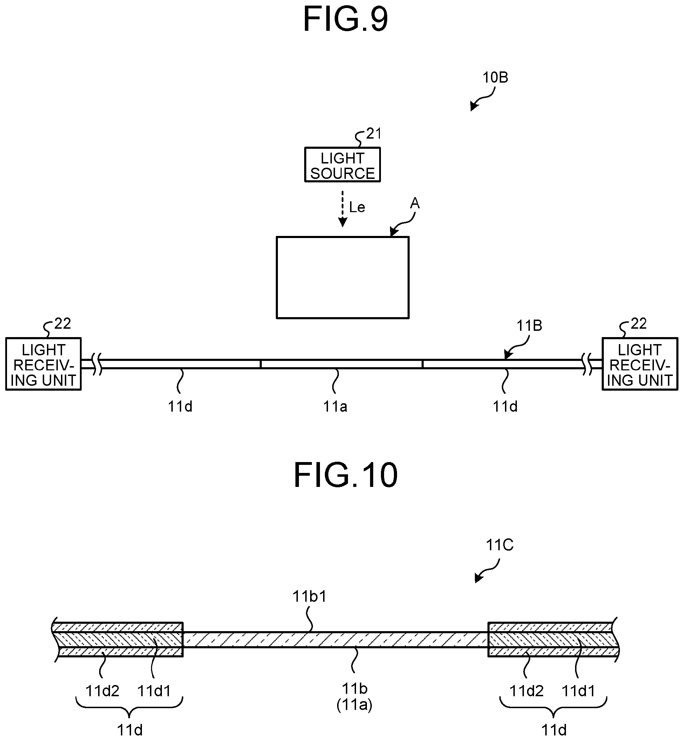

FIG. 9 is a side view of an object detection device 10B of the second embodiment. In the present embodiment as well, the object detection device 10B is an active detection device.

As illustrated in FIG. 9, a sensor unit 11a may not have a curved portion and may extend linearly. In addition, the sensor unit 11a may include a plurality of nanostructures 11p as in the first embodiment.

Further, as illustrated in FIG. 9, a light source 21 may be provided at a position away from an optical fiber 11B. In this case, the light source 21 and the sensor unit 11a are disposed so that emitted light Le output from the light source 21 is input to the sensor unit 11a from the outer periphery thereof as test light.

In addition, as illustrated in FIG. 9, a light receiving unit 22 may be provided at each of the opposite ends of the optical fiber 11B in the longitudinal direction. In this case, a control unit 30 may detect an object A based on the sum or average of the light receiving intensities of the two light receiving units 22. Furthermore, the control unit 30 may estimate the position of the object A in the direction along the longitudinal direction of the optical fiber 11B (left-and-right direction in FIG. 9) from a difference between the light receiving intensities of the two light receiving units 22.

It is noted that a reflection unit or a filter may be provided instead of one light receiving unit 22 of the two light receiving units 22. The reflection unit keeps light in the optical fiber 11B. In addition, the filter allows light to exit to the outside of the optical fiber 11B and suppresses light from entering the optical fiber 11B.

According to the present embodiment, the same effects as those of the above embodiment can be obtained. It is noted that, in the present embodiment as well, the object detection device 10B may be a passive detection device without the light source 21.

### [First modification of optical fiber]

FIG. 10 is a side view of a part of an optical fiber 11C of a first modification. The optical fiber 11C can be incorporated in an object detection device instead of the optical fiber of the above embodiment.

As illustrated in FIG. 10, a sensor unit 11a may have only a core 11b without having a clad. In other words, the clad may be removed in the sensor unit 11a. With such a configuration, in the sensor unit 11a, an outer periphery 11b1 of the core 11b is exposed. As a result, light from the outside is easily input to the sensor unit 11a, and detection sensitivity by the sensor unit 11a becomes higher. It is noted that it is not necessary that the core 11b is exposed in the entire section of the sensor unit 11a, and it is sufficient that the outer periphery 11b1 of the core 11b is exposed in at least a part of the sensor unit 11a. The outer periphery 11b1 may also be referred to as an outer peripheral surface.

Further, in this case, the outer periphery 11b1 may be provided with an uneven structure (not illustrated) including a concave portion or a convex portion. If a size of the uneven structure, for example, a length or a distance thereof in the longitudinal direction, a height difference thereof in the radial direction, and the like are 1/10 or less of the wavelength of light entering the core 11b from the outside via the outer periphery 11b1, Rayleigh scattering occurs at the outer periphery 11b1 serving as an interface, and light from the outside easily enters the core 11b. Additionally, if the size of the uneven structure is smaller than 1/100 of the wavelength of light, the outer periphery 11b1 is smoothed, and as such, Rayleigh scattering is less likely to occur at the outer periphery 11b1. Therefore, the size of the uneven structure is preferably 1/100 or more and 1/10 or less of the wavelength of the light entering the core 11b from the outside via the outer periphery 11b1, that is, the light received by the light receiving unit 22.

A delivery optical fiber 11d includes a core 11d1 and a clad 11d2 surrounding the core 11d1. The core 11b of the sensor unit 11a is optically connected to the core 11d1 of the delivery optical fiber 11d. Specifically, for example, the core 11b and the core 11d1 are fusion-spliced.

### [Second modification of optical fiber]

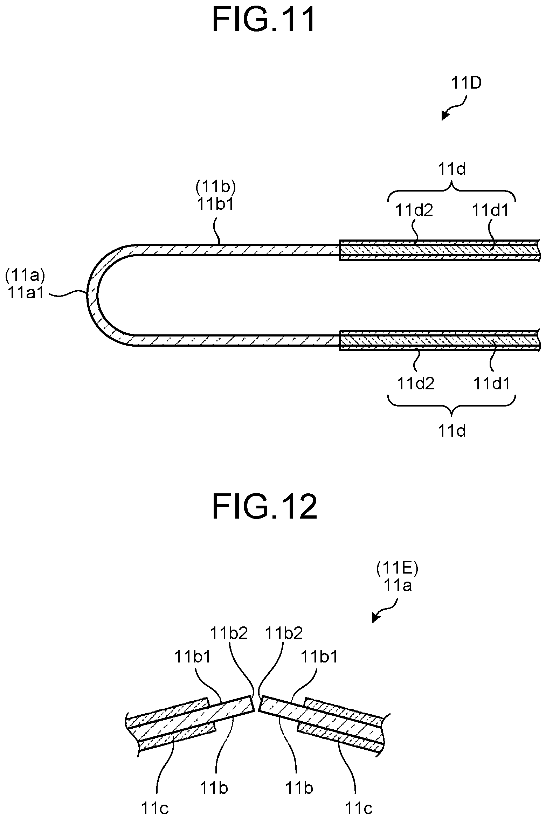

FIG. 11 is a side view of a part of an optical fiber 11D of a second modification. The optical fiber 11D can be incorporated in an object detection device instead of the optical fiber of the above embodiment.

As illustrated in FIG. 11, a sensor unit 11a having a core 11b, an outer periphery 11b1 of which is at least partially exposed, may have a curved portion 11a1. According to such a configuration, since the core 11b is curved, light from the outside more easily enters the core 11b, and as such, detection sensitivity by the sensor unit 11a becomes higher.

### [Third modification of optical fiber]

FIG. 12 is a side view of a part of an optical fiber 11E according to a third modification. The optical fiber 11E can be incorporated in an object detection device instead of the optical fiber of the above embodiment.

As illustrated in FIG. 12, a sensor unit 11a having a core 11b, an outer periphery 11b1 of which is at least partially exposed, may be divided in the middle, and an end face 11b2 in the longitudinal direction (optical axis direction) may be exposed. The end face 11b2 is a surface intersecting the longitudinal direction, and is an example of an exposed end face. The end faces 11b2 of the two cores 11b face each other. The two cores 11b are optically connected although the transmission loss therebetween is high. According to such a configuration, light can enter the core 11b from the end face 11b2 in addition to the outer periphery 11b1. Therefore, light from the outside more easily enters the core 11b, and as such, detection sensitivity by the sensor unit 11a becomes higher. It is noted that the sensor unit 11a of the present modification may be formed by cutting the core 11b, or may be configured by two separately formed portions. Further, the two end faces 11b2 may be in contact with each other. In addition, the core 11b may be partially connected and partially separated, and the end face 11b2 may be partially exposed.

### [Fourth modification of optical fiber]

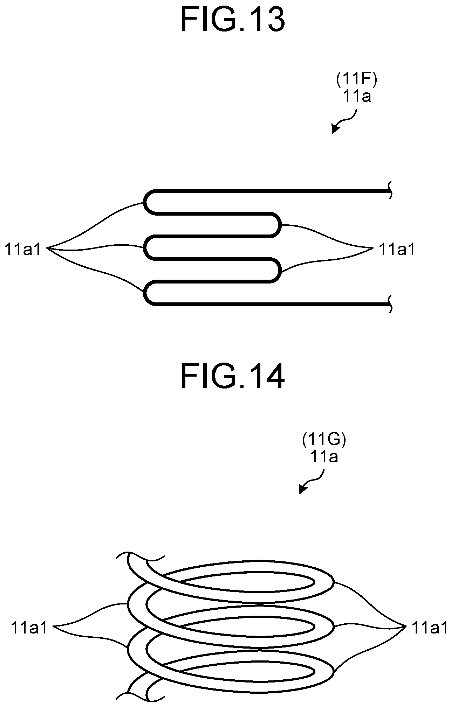

FIG. 13 is a side view of a part of an optical fiber 11F according to a fourth modification. The optical fiber 11F can be incorporated in an object detection device instead of the optical fiber of the above embodiment.

As illustrated in FIG. 13, a sensor unit 11a may have a plurality of curved portions 11a1. According to such a configuration, as the number of curved portions 11a1 increases, light from the outside more easily enters a core 11b, and as such, detection sensitivity by the sensor unit 11a becomes higher.

### [Fifth modification of optical fiber]

FIG. 14 is a side view of a part of an optical fiber 11G according to a fifth modification. The optical fiber 11G can be incorporated in an object detection device instead of the optical fiber of the above embodiment.

As illustrated in FIG. 14, a sensor unit 11a may be configured in a coil shape. The coil may have an elliptical shape or an oval shape when viewed in the winding axis direction of the coil. Further, the coil may be configured by being wound around a core member (not illustrated). The core member in this case may be a band plate-shaped member having a rounded edge. In the present modification as well, the sensor unit 11a has a plurality of curved portions 11a1. Therefore, according to such a configuration, as the number of curved portions 11a1 increases, light from the outside more easily enters a core 11b, and as such, detection sensitivity by the sensor unit 11a becomes higher.

Although the embodiments of the present invention have been exemplified above, the above embodiments are merely examples, and are not intended to limit the scope of the invention. The above-described embodiments can be implemented in various other forms, and various omissions, substitutions, combinations, and changes can be made without departing from the gist of the invention. In addition, specifications (structure, type, direction, model, size, length, width, thickness, height, number, arrangement, position, material, and the like) of each configuration, shape, and the like can be appropriately changed and implemented.

For example, in the above embodiment and modification, the sensor unit (sensor optical fiber) and the delivery optical fiber are connected to each other to form the optical fiber, but the present invention is not limited thereto, and the sensor unit may be formed in a part of the optical fiber by locally performing processing in the optical fiber.

In addition, for example, optical fibers having different mode transmission states may be applied to the sensor unit and the delivery optical fiber so that mode conversion occurs at a connection portion (boundary) between the sensor unit (sensor optical fiber) and the delivery optical fiber between the sensor unit and the light source.

### Industrial Applicability

The present invention can be used for an object detection device.

### Reference Signs List

- 10A, 10B: OBJECT DETECTION DEVICE
- 11A to 11G: OPTICAL FIBER
- 11a: SENSOR UNIT (SENSOR OPTICAL FIBER)
- 11a1: CURVED PORTION
- 11b: CORE
- 11b1: OUTER PERIPHERY
- 11b2: END FACE (EXPOSED END FACE)
- 11c: CLAD
- 11d: DELIVERY OPTICAL FIBER
- 11d1: CORE
- 11d2: CLAD
- 11e1: END (ONE END)
- 11e2: END (THE OTHER END)
- 11f: BOUNDARY
- 11p: NANOSTRUCTURES
- 21: LIGHT SOURCE
- 22: LIGHT RECEIVING UNIT
- 30: CONTROL UNIT (ARITHMETIC PROCESSING UNIT)
- A: OBJECT
- L: LENGTH
- Le: EMITTED LIGHT
- Lr: REFLECTED LIGHT
- R: CURVATURE RADIUS
- Th: PREDETERMINED VALUE (THRESHOLD)
- t1: TIME

## Claims

1. An object detection device comprising:
an optical fiber at least partially including a sensor optical fiber configured to transmit light with a loss of 0.3 dB/m or more; and
a light receiving unit configured to receive, from the optical fiber, the light received by the sensor optical fiber,
wherein the object detection device is configured to detect an object based on an intensity of the light received by the light receiving unit.

2. The object detection device according to claim 1, wherein the sensor optical fiber includes a core, an outer periphery of which is at least partially exposed.

3. The object detection device according to claim 2, wherein the outer periphery has an uneven structure provided thereon, the uneven structure having a size of 1/100 or more and 1/10 or less of a wavelength of the light received by the light receiving unit.

4. The object detection device according to any one of claims 1 to 3, wherein the sensor optical fiber has a length that is ten times or more a wavelength of the light received by the light receiving unit.

5. The object detection device according to any one of claims 1 to 4, wherein the sensor optical fiber includes a curved portion.

6. The object detection device according to claim 5, wherein the sensor optical fiber includes a plurality of curved portions as the curved portion.

7. The object detection device according to any one of claims 1 to 6, wherein a core of the sensor optical fiber includes an exposed end face intersecting a longitudinal direction.

8. The object detection device according to any one of claims 1 to 7, wherein the sensor optical fibers include a plurality of nanostructures each having a cross-sectional diameter of 100 nm or less in a cross section perpendicular to a longitudinal direction of the sensor optical fiber.

9. The object detection device according to claim 8, wherein the nanostructure is a fine particle, a tube, or a void.

10. The object detection device according to any one of claims 1 to 9, wherein the sensor optical fiber is a plastic fiber.

11. The object detection device according to any one of claims 1 to 10, further comprising a light source configured to input test light to one end of the optical fiber,
wherein the light receiving unit is configured to receive the test light output from the other end of the optical fiber.

12. The object detection device according to any one of claims 1 to 11, wherein the optical fiber includes the sensor optical fiber and a delivery optical fiber connected to the sensor optical fiber, the delivery optical fiber having a transmission loss smaller than a transmission loss of the sensor optical fiber.

13. The object detection device according to claim 12, wherein an effective relative refractive-index difference of the delivery optical fiber is larger than an effective relative refractive-index difference of the sensor optical fiber.

14. The object detection device according to claim 12 or 13, further comprising a light source configured to input test light to the optical fiber,
wherein, at a wavelength of the light received by the light receiving unit, the sensor optical fiber is a single-mode optical fiber, and the delivery optical fiber interposed between the light source and the sensor optical fiber is a multi-mode optical fiber.

15. The object detection device according to any one of claims 1 to 14, wherein external force acting on the sensor optical fiber is detected based on the intensity of the light received by the light receiving unit.

16. An object detection device comprising:
an optical fiber including a sensor unit to which light is input from an outer periphery thereof; and
a light receiving unit configured to receive, from the optical fiber, the light input to the sensor unit,
wherein the object detection device is configured to detect an object based on an intensity of the light received by the light receiving unit.

17. The object detection device according to claim 16, wherein the sensor unit includes a core, an outer periphery of which is at least partially exposed.

18. The object detection device according to claim 16 or 17, wherein the optical fiber includes a section having a transmission loss lower than a transmission loss of the sensor unit.

19. The object detection device according to any one of claims 16 to 18, wherein the optical fiber includes a section having an effective relative refractive-index difference larger than an effective relative refractive-index difference of the sensor unit.

20. An object detection device comprising:
an optical fiber including a core, an outer periphery of which is partially exposed; and
a light receiving unit configured to receive, from the optical fiber, light input from the outer periphery,
wherein the object detection device is configured to detect an object based on an intensity of the light received by the light receiving unit.
